# EUROPEAN PATENT SPECIFICATION

(11) **EP 4 346 047 B1**
(45) Date of publication and mention of the grant of the patent: **26.11.2025**
(21) Application number: 23197055.9
(22) Date of filing: 13.09.2023
(51) Int. Cl.: H02J 3/32, H02J 7/00, H02M 1/00, H02M 3/00, H02M 3/158

(54) **POWER CONVERSION APPARATUS AND ENERGY STORAGE SYSTEM**
LEISTUNGSUMWANDLUNGSVORRICHTUNG UND ENERGIESPEICHERSYSTEM
APPAREIL DE CONVERSION DE PUISSANCE ET SYSTÈME DE STOCKAGE D'ÉNERGIE

(30) Priority: 13.09.2022 CN 202211111958
(43) Date of publication of application: 03.04.2024
(73) Proprietor: Huawei Digital Power Technologies Co., Ltd., Shenzhen, Guangdong 518043 (CN)
(72) Inventor: CHEN, Baoguo, Shenzhen, 518043 (CN); SHENG, Ren, Shenzhen, 518043 (CN); GE, Rui, Shenzhen, 518043 (CN); LIU, Ling, Shenzhen, 518043 (CN)
(74) Representative: Gill Jennings & Every LLP

(56) References cited:
- CN-A- 105 406 695
- US-A1- 2019 356 227

## Description

### TECHNICAL FIELD

This application relates to a power electronics system, and in particular to a power conversion apparatus and an energy storage system.

### BACKGROUND

At present, a new energy power generation technology has made great progress. To maintain stability of a new energy power generation system, an energy storage system with a specific capacity is usually required. As a proportion of new energy generation is increasing, an energy storage system with a gradually increasing capacity needs to be configured. Therefore, it is important to improve reliability and system efficiency of the energy storage system.

Currently, most energy storage systems use four-port non-isolated direct current to direct current (direct current to direct current, DC-DC) topology to implement a charge-discharge function and a buck-boost function of a battery in the energy storage system. During charging and discharging, all power currents are carried by a printed circuit board (printed circuit board, PCB). When a load power is larger, the more serious the PCB heats, which causes more loss. It brings a great challenge to design of the PCB.

In view of this, a power conversion apparatus needs to be designed, so that the power current flows through the PCB board as little as possible, to reduce heating and a loss of the PCB caused by the flowing current, and improve system efficiency and reliability.
CN105406695A relates to a switching power supply filter circuit. The circuit comprises a filter capacitor C1, a filter capacitor C2, a filter capacitor C2, a filter capacitor C3, a filter capacitor C4, a common mode inductor L1, and a non-isolation power conversion module U1, wherein the filter capacitors C1 and C3 and the common mode inductor L1 are used for filtering a common mode interference signal, and the filter capacitors C2 and C4 are used for filtering a differential mode interference signal. The non-isolation power conversion module U1 is used for voltage conversion. According to the embodiment of the invention, the circuit can achieve the filtering of a switch power supply in a non-isolation architecture. The first end of the filter capacitor C1 is used to connect the power source Vin, the second end of the filter capacitor C1 is used to connect the ground end, the first end of the filter capacitor C2 and the first end of the three-wire common mode inductor L1 The signal input terminal 1 is respectively connected to the first end of the filter capacitor C1, the second end of the filter capacitor C2, the first reference voltage terminal 2 of the three-wire common mode inductor L1, and the first end of the filter capacitor C4. The first signal output terminal 3 of the three-wire common mode inductor L1 is connected to the signal input terminal IN of the non-isolated power conversion module U1, and the second signal input terminal 4 of the three-wire common mode inductor L1 is connected. The signal output terminal OUT of the non-isolated power conversion module U1, the second reference voltage terminal 5 of the three-wire common mode inductor L1 is respectively connected to the reference voltage input terminal RIN of the non-isolated power conversion module U1 and the non-isolated power The second signal output terminal 6 of the three-wire common mode inductor L1 is connected to the first end of the filter capacitor C3 and the second end of the filter capacitor C4, respectively, and the filter capacitor Second of C3 The end is used to connect the ground end, the first end of the filter capacitor C3 serves as the output end Vout of the switching power supply filter circuit.

US 2019356227A1 relate to a four quadrant buck then boost or boost then buck converter or a 2 quadrant buck-boost controller embodied in a single integrated circuit.

### SUMMARY

This application provides a power conversion apparatus and an energy storage system, so that a power current may flow through a PCB as little as possible, to reduce heating and a loss of the PCB caused by the flowing current, and improve system efficiency and reliability.

Aspects of the invention are set out in accordance with the appended independent claims. Advantageous embodiments are set out according to the dependent claims. According to a first aspect, this application provides a power conversion apparatus in accordance with appended claim 1.

According to the power conversion apparatus provided in this application, a three-power terminal structure is used, so that a power current mainly flows through an external power bus, and power currents that flow through a bus connected to the first negative end or the second negative end may mutually cancel each other out, which reduces a loss on a PCB board caused by the flowing current and improves system efficiency and reliability.

In a possible implementation, the second power terminal specifically includes a first sub-terminal and a second sub-terminal.

The first device is separately connected to the second power terminal and the first power terminal through the first positive output end and the first negative output end, to input the first voltage to the power conversion circuit. The second device is separately connected to the second power terminal and the third power terminal through the second positive input end and the second negative input end, to receive the second voltage output by the power conversion circuit. In this topology structure, the first positive end and the second positive end in the power conversion circuit are used when sharing a power supply, and power currents flowing through the bus connected to the first negative end or the second negative end may mutually cancel each other out, which reduces the loss caused by the flowing current.

In an aspect, the power conversion circuit specifically includes a third capacitor, a second inductor, a third switch component, a fourth switch component, and a fourth capacitor, where a first end of the third capacitor is connected to a first end of the second inductor, a second end of the second inductor is separately connected to a first end of the third switch component and a first end of the fourth switch component, a second end of the third capacitor is separately connected to a second end of the third switch component and a second end of the fourth capacitor, a second end of the fourth switch component is connected to a first end of the fourth capacitor, a third end of the third switch component is configured to input a signal for controlling a status of the third switch component, and a third end of the fourth switch component is configured to input a signal for controlling a status of the fourth switch component. The first positive end is connected to the first end of the third capacitor, the first negative end is connected to the second end of the third capacitor, the second positive end is connected to the first end of the fourth capacitor, and the second negative end is connected to the second end of the fourth capacitor; or the first positive end is connected to the first end of the fourth capacitor, the first negative end is connected to the second end of the fourth capacitor, the second positive end is connected to the first end of the third capacitor, and the second negative end is connected to the second end of the third capacitor.

When the power conversion circuit meets a condition of being enabled, turn-off of the power device in the power conversion circuit is controlled to change according to a specific rule, so that an output voltage of the power conversion circuit may be adjusted. To be not limited to a buck mode, a boost mode, or the like, when the first positive end is connected to the first end of the third capacitor, and the first negative end is connected to the second end of the third capacitor, the second positive end is connected to the first end of the fourth capacitor, and the second negative end is connected to the second end of the fourth capacitor. In this case, the power conversion circuit is in a boost mode in a forward direction. When the first positive end is connected to the first end of the fourth capacitor, and the first negative end is connected to the second end of the fourth capacitor, the second positive end is connected to the first end of the third capacitor, and the second negative end is connected to the second end of the third capacitor. In this case, the power conversion circuit is in a buck mode in a reverse direction.

In an aspect , the power conversion circuit specifically includes a fifth capacitor, a third inductor, a fifth switch component, a sixth switch component, a seventh switch component, an eighth switch component, and a sixth capacitor. A first end of the fifth capacitor is connected to a first end of the fifth switch component, a second end of the fifth switch component is connected to the first end of the third inductor, the second end of the fifth switch component is connected to a first end of the sixth switch component, a second end of the sixth switch component is connected to a second end of the fifth capacitor, a first end of the seventh switch component is connected to a first end of the sixth capacitor, a second end of the seventh switch component is connected to a first end of the eighth switch component, a second end of the eighth switch component is connected to the second end of the sixth switch component, the second end of the eighth switch component is further connected to a second end of the sixth capacitor, a second end of the third inductor is connected to the first end of the seventh switch component, a third end of the fifth switch component is configured to input a signal for controlling a status of the fifth switch component, a third end of the sixth switch component is configured to input a signal for controlling a status of the sixth switch component, a third end of the seventh switch component is configured to input a signal for controlling a status of the seventh switch component, and a third end of the eighth switch component is configured to input a signal for controlling a status of the eighth switch component. The first positive end is connected to the first end of the fifth capacitor, the first negative end is connected to the second end of the fifth capacitor, the second positive end is connected to the first end of the sixth capacitor, and the second negative end is connected to the second end of the sixth capacitor; or the first positive end is connected to the first end of the sixth capacitor, the first negative end is connected to the second end of the sixth capacitor, the second positive end is connected to the first end of the fifth capacitor, and the second negative end is connected to the second end of the fifth capacitor.

To suppress common-mode noise of the power conversion circuit, the power conversion apparatus further includes a three-wire common-mode inductor. The three-wire common-mode inductor includes a first winding, a second winding, and a third winding. A dotted terminal of the first winding is connected to the first power terminal, a dotted terminal of the second winding is connected to a second power terminal, and a dotted terminal of the third winding is connected to a third power terminal. An undotted terminal of the first winding is connected to the first positive end, the first negative end and/or the second negative end is connected to an undotted terminal of the second winding, and an undotted terminal of the third winding is connected to the second positive end.

In a possible implementation, the power conversion apparatus further includes a controller, configured to control turn-off of the power device in the power conversion circuit, to adjust the output voltage of the power conversion circuit.

In a possible implementation, the second power terminal is a copper bar or a connector structure. The first negative output end of the first device and the second negative input end of the second device may be connected to the first negative end or the second negative end by using a cable copper bar or a connector structure. Alternatively, the first positive output end of the first device and the second positive input end of the second device may be connected to the first positive end or the second positive end by using a copper bar or a connector structure.

In a possible implementation, at least one of the following devices may be included between the first power terminal and the second power terminal: a fuse, a switch component, or a shunt. The fuse may be blown immediately when a current in a loop increases rapidly because of a short-circuit fault of a line, so as to protect an electrical device and a line connected to the fuse, thereby avoiding an accident caused by damage. The switch component is configured to control a connection status between the first power terminal and the second power terminal. The shunt is configured to measure a magnitude of a current between the first power terminal and the second power terminal, and is made according to a principle a voltage is generated at two ends of a resistor when the current passes through the resistor.

According to a second aspect, this application provides an energy storage system in accordance with appended claim 7.

According to a third aspect, this application provides a photovoltaic storage system in accordance with appended claim 8.

For descriptions of technical effects that may be achieved in the second aspect or the third aspect, refer to descriptions of technical effects that may be achieved in any possible design of the first aspect. No repeated description is provided.

### BRIEF DESCRIPTION OF DRAWINGS

FIG. 1 is a schematic diagram of a four-port non-isolated DC-DC topology;
FIG. 2A is a schematic diagram 1 of a structure of a power conversion apparatus;
FIG. 2B is a schematic diagram 2 of a structure of a power conversion apparatus;
FIG. 3A is a schematic diagram of a current flow direction of an existing power conversion circuit;
FIG. 3B is a schematic diagram 1 of a current flow direction of a power conversion apparatus according to this application;
FIG. 3C is a schematic diagram 2 of a current flow direction of a power conversion apparatus according to this application;
FIG. 4 is a schematic diagram 1 of a connection of a power conversion apparatus shown as an example being not part of this application;
FIG. 5 is a schematic diagram 2 of a connection of a power conversion apparatus according to this application;
FIG. 6 is a schematic diagram 1 of a structure of a power conversion circuit;
FIG. 7 is a schematic diagram 2 of a structure of a power conversion circuit;
FIG. 8 is a schematic diagram 3 of a structure of a power conversion circuit; and
FIG. 9 is a schematic diagram 3 of a structure of a power conversion apparatus.

### DESCRIPTION OF EMBODIMENTS

To make objectives, technical solutions, and advantages of this application clearer, the following further describes this application in detail with reference to the accompanying drawings. However, example embodiments may be implemented in a plurality of forms and should not be construed as being limited to embodiments described herein. On the contrary, these embodiments are provided such that this application is more comprehensive and complete and fully conveys the concept of the example embodiments to a person skilled in the art. Identical reference numerals in the accompanying drawings denote identical or similar structures. Therefore, repeated description thereof is omitted. Expressions of positions and directions in this application are described by using the accompanying drawings as an example. However, changes may also be made as required, and all the changes fall within the protection scope of this application. The accompanying drawings in this application are merely used to illustrate relative position relationships and do not represent an actual scale.

To make objectives, technical solutions, and advantages of this application clearer, the following further describes this application in detail with reference to the accompanying drawings. A specific operation method in a method embodiment may also be applied to an apparatus embodiment or a system embodiment. It should be noted that in description of this application, "at least one" means one or more, and "a plurality of" means two or more. In view of this, in embodiments of the present invention, "a plurality of" may also be understood as "at least two". The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects unless otherwise specified. In addition, it should be understood that in the description of this application, terms such as "first" and "second" are merely used for distinction and description, and shall not be understood as an indication or implication of relative importance or an indication or implication of an order.

It should be noted that a "connection" in embodiments of this application refers to an electric connection, and a connection between two electrical elements may be a direct or indirect connection between the two electrical elements. For example, a connection between A and B may represent that A and B are directly connected to each other, or A and B are indirectly connected to each other by using one or more other electrical elements. For example, the connection between A and B may also represent that A is directly connected to C, C is directly connected to B, and A and B are connected to each other through C.

The following first describes an application scenario in embodiments of this application.

In recent years, new energy power stations, such as wind and solar power stations, generate more and more energy. Because the new energy power stations are characterized by unstable power generation, an impact on a power grid will deteriorate frequency stability of the power grid. To maintain a stable frequency of a power system, an energy storage system with a specific capacity is usually required. The energy storage system may store electric energy by using a specific medium, and release the stored energy to generate electricity when necessary. As a proportion of new energy generation increases, a capacity of the energy storage system also increases. Therefore, reliability and system efficiency of the energy storage system needs to be improved.

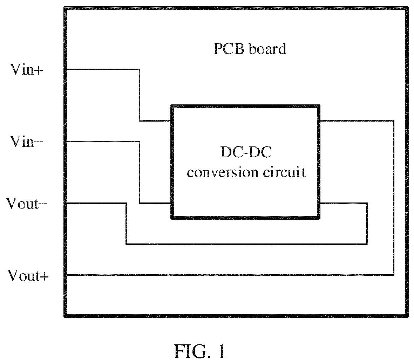

A power conversion circuit in an energy storage system mostly uses a four-port non-isolated DC-DC topology structure, to implement a charge-discharge function and a buck-boost function of a battery in the energy storage system. Refer to FIG. 1. FIG. 1 is a schematic diagram of a four-port non-isolated DC-DC topology. One end of the four-port (Vin+, Vin-, Vout+, and Vout-) non-isolated DC-DC topology structure may be connected to an energy storage unit, and another end may be connected to an inverter, so that the inverter converts DC power into AC power and outputs the AC power to the power grid or load. It can be seen from FIG. 1 that, all power currents (power input, power output, and a power ground cable) are carried by a PCB board. With rapid increase of component density and power, the PCB board heats more and more seriously, and a caused loss is also increasing.

In view of this, this application provides a power conversion apparatus, so that power currents flowing through a bus connected to a first negative end or a second negative end may mutually cancel each other out, so that a part of the power currents does not flow through a PCB board, which reduces a loss on the PCB board caused by the flowing current, and improves system efficiency and reliability.

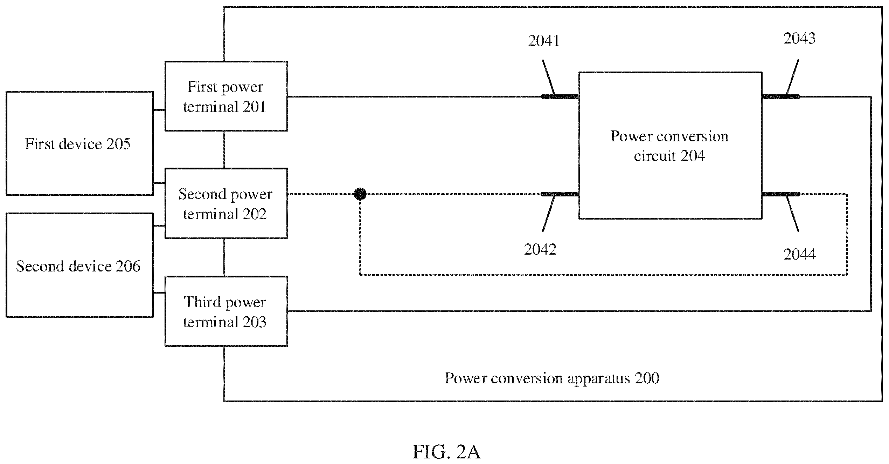

Refer to FIG. 2A. FIG. 2A is a schematic diagram 1 of a structure of a power conversion apparatus. A power conversion apparatus 200 includes a first power terminal 201, a second power terminal 202, a third power terminal 203, and a power conversion circuit 204. The power conversion circuit 204 includes a first positive end 2041, a first negative end 2042, a second positive end 2043, a second negative end 2044, and at least one power device. The first negative end 2042 and the second negative end 2044 have a same potential. The power conversion circuit 204 is configured to convert a first voltage input by the first device 205 into a second voltage and output the second voltage to the second device 206. The first power terminal 201 is connected to the first positive end 2041, the first negative end 2042 and/or the second negative end 2044 is connected to the second power terminal 202, and the third power terminal 203 is connected to the second positive end 2043.

The power conversion circuit 204 may be a conversion circuit that converts a direct current with a constant voltage into a direct current with an adjustable voltage, and may also be referred to as a direct current chopper. An output voltage may be regulated by changing turn-on and turn-off of the at least one power device in the power conversion circuit 204, or changing a ratio of duration in which a switch component is on or off. For example, the power conversion circuit 204 may be a buck (buck) circuit, a boost (boost) circuit, a buck-boost (buck-boost) circuit, or the like. A specific circuit type and a circuit combination manner should be known by a person skilled in the art, and details are not described herein.

The power device may be one or more of a plurality of types of switch components, for example, a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), or a silicon carbide (SiC) power transistor. Details are not listed in this embodiment of this application.

The power conversion circuit 204 is configured to convert the first voltage input by the first device 205 into the second voltage, and output the second voltage to the second device 206. The first device 205 may be an energy storage unit, and the second device 206 may be a load device or a power grid. An energy storage component of the energy storage unit supplies power to the load device when energy generation of a new energy power station is unstable. Because a voltage provided by the energy storage component cannot meet a voltage requirement of the load device, the energy storage unit may perform voltage regulation by using the power conversion circuit 204, to supply power to the load device.

For example, if the first voltage is greater than the second voltage, the power conversion circuit 204 may be the buck circuit. If the first voltage is less than the second voltage, the power conversion circuit 204 may be the boost circuit. If a value relationship between the first voltage and the second voltage is difficult to be determined in advance, the power conversion circuit 204 may be the buck-boost circuit or the like.

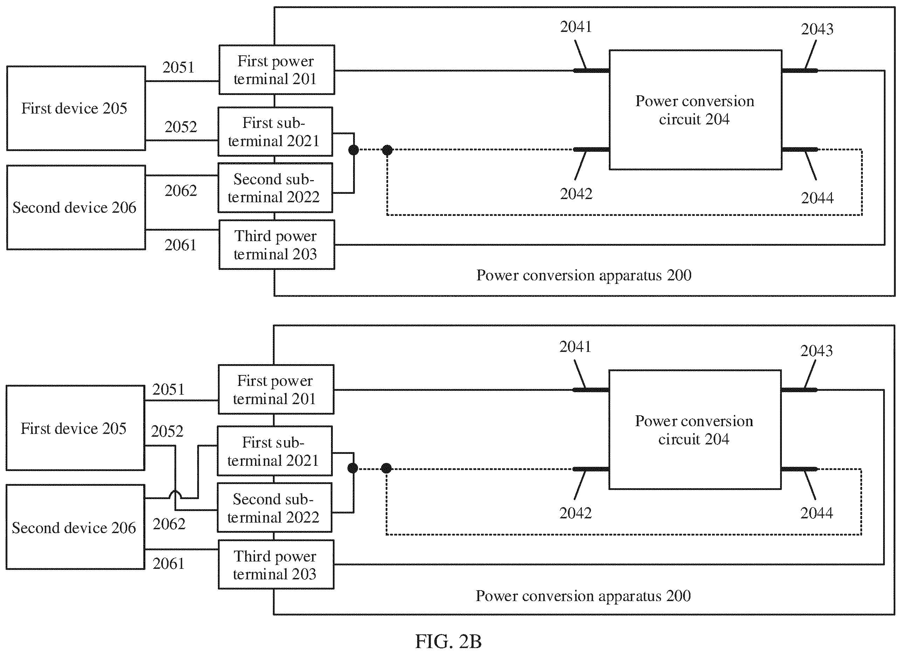

In a possible implementation, refer to FIG. 2B. FIG. 2B is a schematic diagram 2 of a structure of the power conversion apparatus. The second power terminal 202 specifically includes a first sub-terminal 2021 and a second sub-terminal 2022, where the first sub-terminal 2021 is connected to a first negative output end 2052 of the first device 205, and the second sub-terminal 2022 is connected to a second negative input end 2062 of the second device 206.

The second power terminal provided in this application may further have two external connection ports, to facilitate connection between the first device 205 and the second device 206. During an actual connection, a person skilled in the art may connect the first negative output end 2052 of the first device 205 to the first sub-terminal 2021, and connect the second negative input end 2062 of the second device 206 to the second sub-terminal 2022, or may further connect the first negative output end 2052 of the second device 206 to the first sub-terminal 2021, and connect the first negative output end 2052 of the first device 205 to the second sub-terminal 2022. The first sub-terminal 2021 and the second sub-terminal 2022 may be connected inside a module or at the terminal by using a through-current busbar, and are connected to the first negative end 2042 and/or the second negative end 2044 by using a cable (or a copper bar, a connector, or the like).

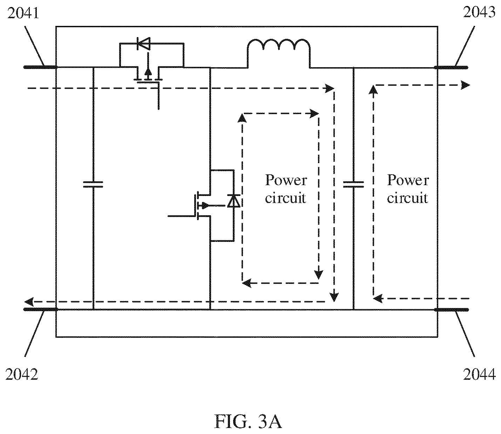

Refer to FIG. 3A. FIG. 3A is a schematic diagram of a current flow direction of an existing power conversion circuit. For example, the power conversion circuit 204 is a buck circuit. A power current input by the first device 205 flows in from the first positive end 2041 and flows out from the first negative end 2042, and a power current output to the second device 206 flows in from the second negative end 2044 and flows out from the second positive end 2043. It may be seen from FIG. 3A that, all positive/negative buses connected to the first positive end 2041, the first negative end 2042, the second positive end 2043, and the second negative end 2044 flow through the power current. Consequently, a PCB heats seriously. In addition, due to a severe heating condition of the PCB, a loss caused by the flowing current is large when the power current flows through the PCB board.

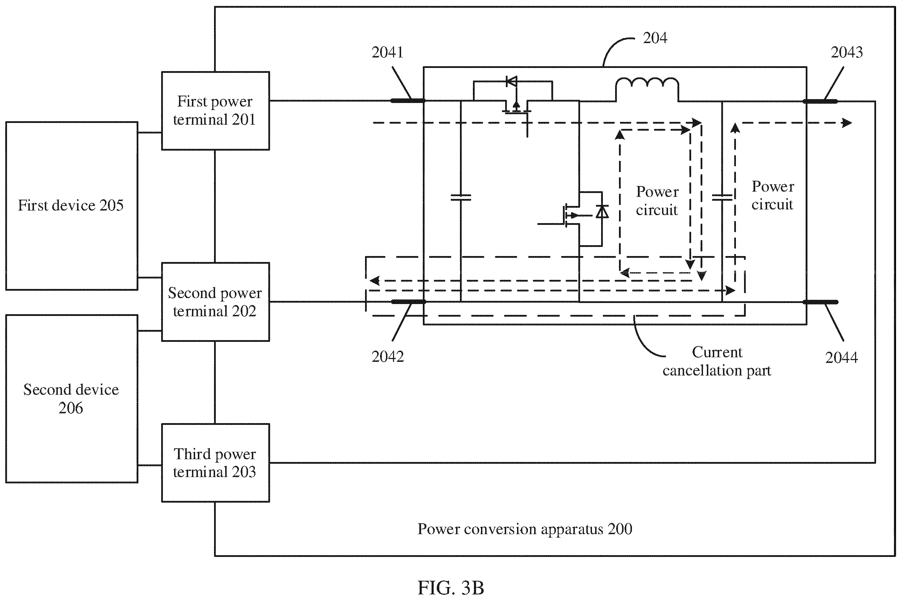

Still using a buck circuit as an example, refer to FIG. 3B. FIG. 3B is a schematic diagram 1 of a current flow direction of the power conversion apparatus according to this application. The first device 205 is connected to the first power terminal 201 and the second power terminal 202. A power current input by the first device 205 may flow in from the first positive end 2041 and flow out from the first negative end 2042. The second device 206 is connected to the second power terminal 202 and the third power terminal 203. A power current output to the second device 206 flows in from the first negative end 2042, and flows out from the second positive end 2043.

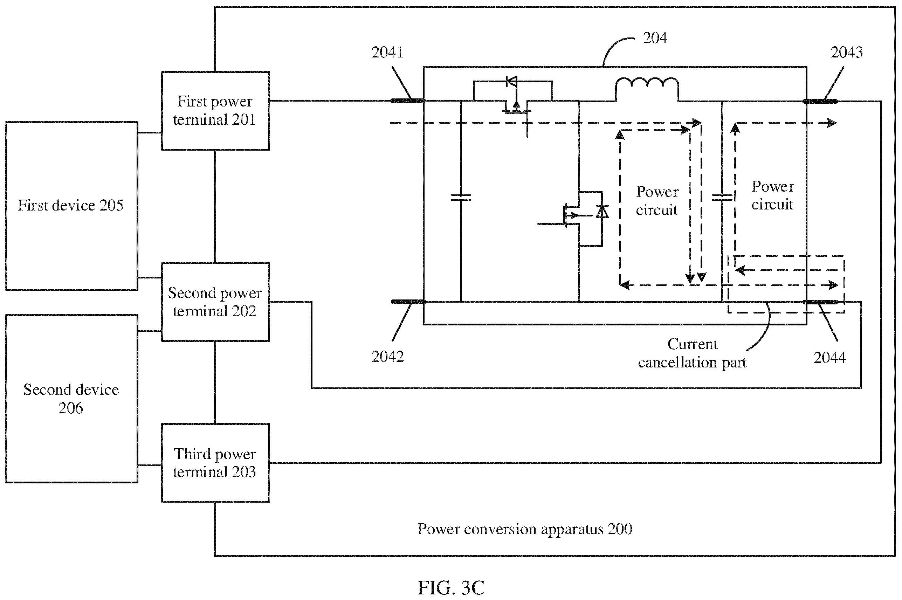

Refer to FIG. 3C. FIG. 3C is a schematic diagram 2 of a current flow direction of the power conversion apparatus according to this application. The first device 205 is connected to the first power terminal 201 and the second power terminal 202. A power current input by the first device 205 may flow in from the first positive end 2041 and flow out from the second negative end 2044. The second device 206 is connected to the second power terminal 202 and the third power terminal 203. A power current output to the second device 206 flows in from the second negative end 2044 and flows out from the second positive end 2043.

It may be learned from FIG. 3B that, because the second power terminal 202 is connected to the first negative end 2042, the power current input by the first device 205 flows out from the first negative end 2042, and the power current output to the second device 206 flows in from the first negative end 2042. Therefore, the two power currents in opposite directions cancel each other out on the bus connected to the first negative end 2042 (where if two current values are not equal, for a power current with a larger current value, at least a part of the power current is cancelled out by another power current with a smaller current value, so that a current that actually flows through the bus connected to the first negative end 2042 is reduced), which reduces the loss of the PCB caused by the flowing current.

It may be learned from FIG. 3C that, because the second power terminal 202 is connected to the second negative end 2044, the power current input by the first device 205 flows out from the second negative end 2044, and the power current output to the second device 206 flows in from the second negative end 2044. Therefore, the two power currents in opposite directions cancel each other out on the bus connected to the second negative end 2044 (where if two current values are not equal, for a power current with a larger current value, at least a part of the power current is cancelled out by another power current with a smaller current value, so that a current that actually flows through the bus connected to the second negative end 2044 is reduced), which reduces the loss of the PCB caused by the flowing current.

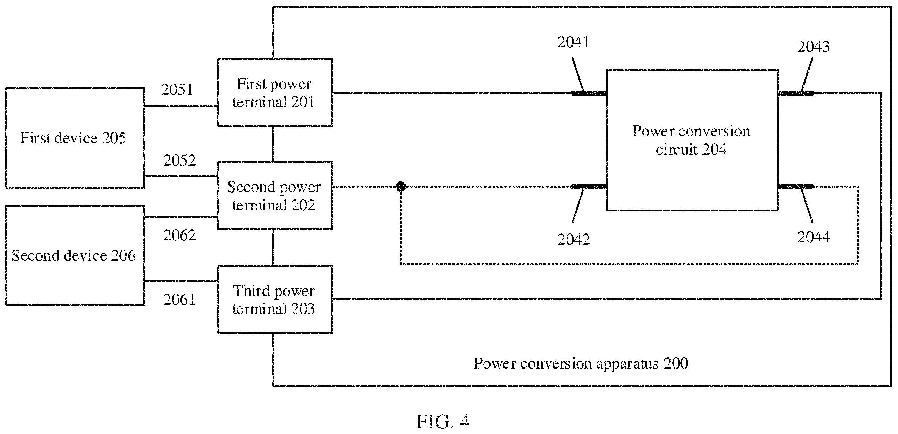

FIG. 4 is a schematic diagram 1 of a connection of the power conversion apparatus shown as an example being not part of this application. A first positive output end 2051 of the first device 205 is connected to the first power terminal 201, and a first negative output end 2052 of the first device 205 is connected to the second power terminal 202. A second positive input end 2061 of the second device 206 is connected to the third power terminal 203, and a second negative input end 2062 of the second device 206 is connected to the second power terminal 202.

The first device 205 is connected to the first power terminal 201 through the first positive output end 2051, and is connected to the second power terminal 202 through the first negative output end 2052, to input the first voltage to the power conversion circuit 204. The second device 206 is connected to the third power terminal 203 through the second positive input end 2061, and is connected to the second power terminal 202 through the second negative input end 2062, to receive the second voltage output by the power conversion circuit 204. In this topology structure, the first negative output end 2052 and the second negative input end 2062 in the power conversion circuit 204 are used when commonly grounded. On the bus connected to the first negative end 2042 or on the bus connected to the second negative end 2044, the power current flowing out from the first device 205 and the power current flowing into the second device 206 may mutually cancel each other out, which reduces the loss of the PCB caused by the flowing current.

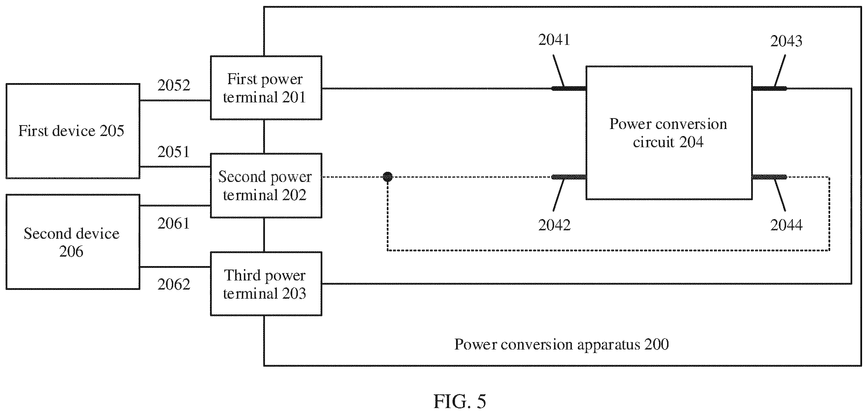

In a possible implementation, refer to FIG. 5. FIG. 5 is a schematic diagram 2 of a connection of the power conversion apparatus. A first positive output end 2051 of the first device 205 is connected to the second power terminal 202, a first negative output end 2052 of the first device 205 is connected to the first power terminal 201, a second positive input end 2061 of the second device 206 is connected to the second power terminal 202, and a second negative input end 2062 of the second device 206 is connected to the third power terminal 203.

The first device 205 is connected to the second power terminal 202 through the first positive output end 2051, and is connected to the first power terminal 201 through the first negative output end 2052, to input the first voltage to the power conversion circuit 204. The second device 206 is connected to the second power terminal 202 through the second positive input end 2061, and is connected to the third power terminal 203 through the second negative input end 2062, to receive the second voltage output by the power conversion circuit 204. In this topology structure, the first positive output end 2051 and the second positive input end 2061 in the power conversion circuit 204 share a power supply. On the bus connected to the second negative end 2044, or on the bus connected to the second negative end 2044, the power current flowing out from the first device 205 and the power current flowing into the second device 206 may mutually cancel each other out, so that the loss of the PCB caused by the flowing current may be reduced.

The foregoing first positive output end 2051 may be a positive terminal of the first device 205, and the first negative output end 2052 may be a negative terminal of the first device 205. The second positive input end 2061 may be used as a positive terminal of the second device 206, and the second negative input end 2062 may be used as a negative terminal of the second device 206.

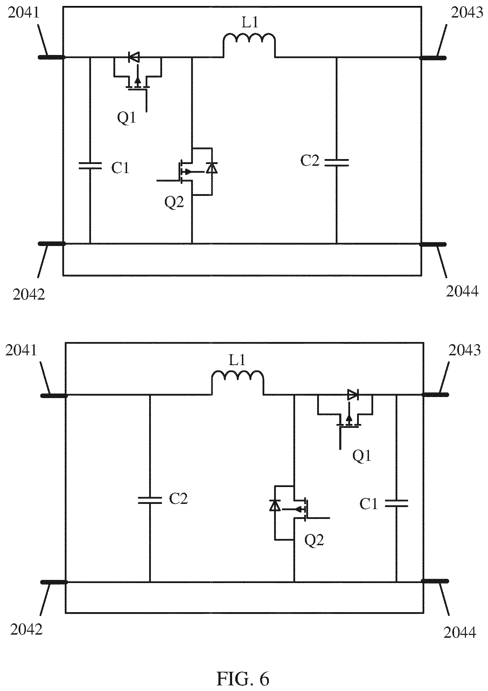

In a possible implementation, refer to FIG. 6. FIG. 6 is a schematic diagram 1 of a structure of the power conversion circuit. The power conversion circuit 204 specifically includes a first capacitor C1, a first switch component Q1, a second switch component Q2, a first inductor L1, and a second capacitor C2, where a first end of the first capacitor C1 is connected to a first end of the first switch component Q1, a second end of the first switch component Q1 is separately connected to a first end of the first inductor L1 and a first end of the second switch component Q2, a third end of the first switch component Q1 is configured to input a signal for controlling a status of the first switch component Q 1, a second end of the second switch component Q2 is separately connected to a second end of the first capacitor C1 and a first end of the second capacitor C2, a third end of the second switch component Q2 is configured to input a signal for controlling a status of the second switch component Q2, and a second end of the first inductor L1 is connected to a second end of the second capacitor C2.

The first positive end 2041 is connected to the first end of the first capacitor C1, the first negative end 2042 is connected to the second end of the first capacitor C1, the second positive end 2043 is connected to the first end of the second capacitor C2, and the second negative end 2044 is connected to the second end of the second capacitor C2. Alternatively, the first positive end 2041 is connected to the first end of the second capacitor C2, the first negative end 2042 is connected to the second end of the second capacitor C2, the second positive end 2043 is connected to the first end of the first capacitor C1, and the second negative end 2044 is connected to the second end of the first capacitor C1.

When the power conversion circuit 204 meets a condition of being enabled, turn-off of the power device in the power conversion circuit 204 is controlled to change according to a specific rule, so that an output voltage of the power conversion circuit 204 may be adjusted. For example, when the first switch component Q1 is enabled, the second switch component Q2 is disabled and the first inductor L1 stores energy. When the first switch component Q1 is disabled, the second switch component Q2 is enabled, and the first inductor L1 releases energy to supply power to the load. Different disabled duty cycles of the first switch component Q1 and the second switch component Q2 are set, to adjust a buck/boost amplitude of the power conversion circuit 204.

To be not limited to a buck mode, a boost mode, or the like, when the first positive end 2041 is connected to the first end of the first capacitor C1 and the first negative end 2042 is connected to the second end of the first capacitor C1, the second positive end 2043 is connected to the first end of the second capacitor C2, and the second negative end 2044 is connected to the second end of the second capacitor C2. In this case, the power conversion circuit 204 is in a buck (buck) mode in a forward direction. When the first positive end 2041 is connected to the first end of the second capacitor C2, and the first negative end 2042 is connected to the second end of the second capacitor C2, the second positive end 2043 is connected to the first end of the first capacitor C1, and the second negative end 2044 is connected to the second end of the first capacitor C1. In this case, the power conversion circuit 204 is in a boost (boost) mode in a reverse direction.

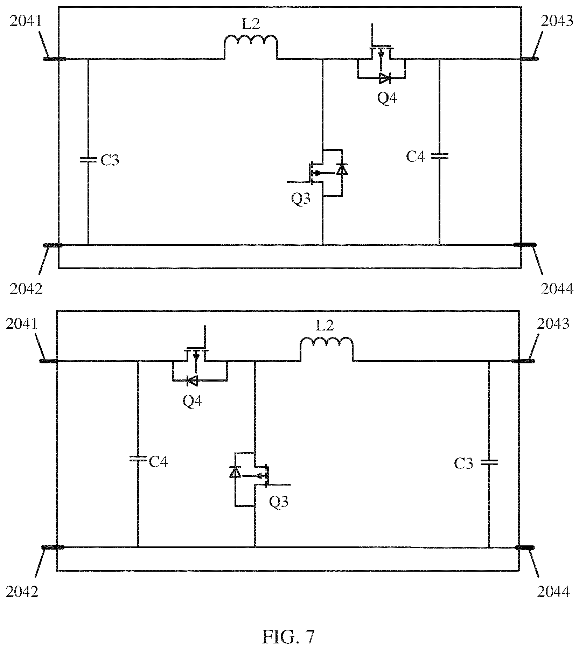

In a possible implementation, refer to FIG. 7. FIG. 7 is a schematic diagram 2 of a structure of a power conversion circuit. The power conversion circuit specifically includes a third capacitor C3, a second inductor L2, a third switch component Q3, a fourth switch component Q4, and a fourth capacitor C4, where a first end of the third capacitor C3 is connected to a first end of the second inductor L2, a second end of the second inductor L2 is separately connected to a first end of the third switch component Q3 and a first end of the fourth switch component Q4, a second end of the third capacitor C3 is separately connected to a second end of the third switch component Q3 and a second end of the fourth capacitor C4, a second end of the fourth switch component Q4 is connected to a first end of the fourth capacitor C4, a third end of the third switch component Q3 is configured to input a signal for controlling a status of the third switch component Q3, and a third end of the fourth switch component Q4 is configured to input a signal for controlling a status of the fourth switch component Q4.

The first positive end 2041 is connected to the first end of the third capacitor C3, the first negative end 2042 is connected to the second end of the third capacitor C3, the second positive end 2043 is connected to the first end of the fourth capacitor C4, and the second negative end 2044 is connected to the second end of the fourth capacitor C4. Alternatively, the first positive end 2041 is connected to the first end of the fourth capacitor C4, the first negative end 2042 is connected to the second end of the fourth capacitor C4, the second positive end 2043 is connected to the first end of the third capacitor C3, and the second negative end 2044 is connected to the second end of the third capacitor C3.

When the power conversion circuit 204 meets a condition of being enabled, turn-off of the power device in the power conversion circuit 204 is controlled to change according to a specific rule, so that an output voltage of the power conversion circuit 204 may be adjusted. For example, when the third switch component Q3 is enabled, the fourth switch component Q4 is disabled and the second inductor L2 stores energy. When the third switch component Q3 is disabled, the second switch component Q2 is enabled, and the second inductor L2 releases energy to supply power to the load. Different disabled duty cycles of the third switch component Q3 and the fourth switch component Q4 are set, to adjust a buck/boost amplitude of the power conversion circuit 204.

To be not limited to a buck mode, a boost mode, or the like, when the first positive end 2041 is connected to the first end of the third capacitor C3 and the first negative end 2042 is connected to the second end of the third capacitor C3, the second positive end 2043 is connected to the first end of the fourth capacitor C4, and the second negative end 2044 is connected to the second end of the fourth capacitor C4. In this case, the power conversion circuit 204 is in a boost (boost) mode in a forward direction. When the first positive end 2041 is connected to the first end of the fourth capacitor C4, and the first negative end 2042 is connected to the second end of the fourth capacitor C4, the second positive end 2043 is connected to the first end of the third capacitor C3, and the second negative end 2044 is connected to the second end of the third capacitor C3. In this case, the power conversion circuit 204 is in a buck (buck) mode in a reverse direction.

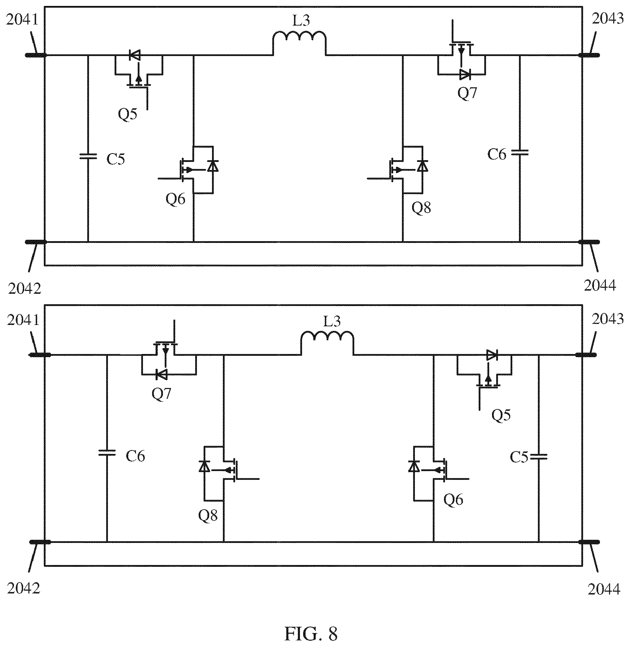

In a possible implementation, refer to FIG. 8. FIG. 8 is a schematic diagram 3 of a structure of a power conversion circuit. The power conversion circuit specifically includes a fifth capacitor C5, a third inductor L3, a fifth switch component Q5, a sixth switch component Q6, a seventh switch component Q7, an eighth switch component Q8, and a sixth capacitor C6, where a first end of the fifth capacitor C5 is connected to a first end of the fifth switch component Q5, a second end of the fifth switch component Q5 is connected to the first end of the third inductor L3, the second end of the fifth switch component Q5 is connected to a first end of the sixth switch component Q6, a second end of the sixth switch component Q6 is connected to a second end of the fifth capacitor C5, a first end of the seventh switch component Q7 is connected to a first end of the sixth capacitor C6, a second end of the seventh switch component Q7 is connected to a first end of the eighth switch component Q8, a second end of the eighth switch component Q8 is connected to the second end of the sixth switch component Q6, the second end of the eighth switch component Q8 is further connected to a second end of the sixth capacitor C6, a second end of the third inductor L3 is connected to the first end of the seventh switch component Q7, a third end of the fifth switch component Q5 is configured to input a signal for controlling a status of the fifth switch component Q5, a third end of the sixth switch component Q6 is configured to input a signal for controlling a status of the sixth switch component Q6, a third end of the seventh switch component Q7 is configured to input a signal for controlling a status of the seventh switch component Q7, and a third end of the eighth switch component Q8 is configured to input a signal for controlling a status of the eighth switch component Q8.

The first positive end 2041 is connected to the first end of the fifth capacitor C5, the first negative end 2042 is connected to the second end of the fifth capacitor C5, the second positive end 2043 is connected to the first end of the sixth capacitor C6, and the second negative end 2044 is connected to the second end of the sixth capacitor C6. Alternatively, the first positive end 2041 is connected to the first end of the sixth capacitor C6, the first negative end 2042 is connected to the second end of the sixth capacitor C6, the second positive end 2043 is connected to the first end of the fifth capacitor C5, and the second negative end 2044 is connected to the second end of the fifth capacitor C5.

When the power conversion circuit 204 meets a condition of being enabled, turn-off of the power device in the power conversion circuit 204 is controlled to change according to a specific rule, so that an output power of the power conversion circuit 204 may be adjusted. For a specific manner of adjusting the power device to be disabled, refer to descriptions corresponding to FIG. 6 and FIG. 7. Details are not described herein again.

The first switch component Q1 to the eighth switch component Q8 may be switching transistors or diodes. A person skilled in the art may freely set the first switch component Q1 to the eighth switch component Q8 based on costs and actual conversion efficiency requirements. This is not limited herein.

In a possible implementation, the power conversion apparatus 200 further includes a controller, configured to control turn on and turn-off of the power device in the power conversion circuit 204, to adjust the output voltage of the power conversion circuit.

The controller may be a general-purpose central processing unit (central processing unit, CPU), a general-purpose processor, a digital signal processor (digital signal processor, DSP), an application-specific integrated circuit (application-specific integrated circuits, ASIC), a field-programmable gate array (field-programmable gate array, FPGA) or another programmable logic device, a transistor logic device, a hardware component, or any combination thereof. The controller may implement or execute various example logical blocks, modules, and circuits described with reference to content disclosed in this application.

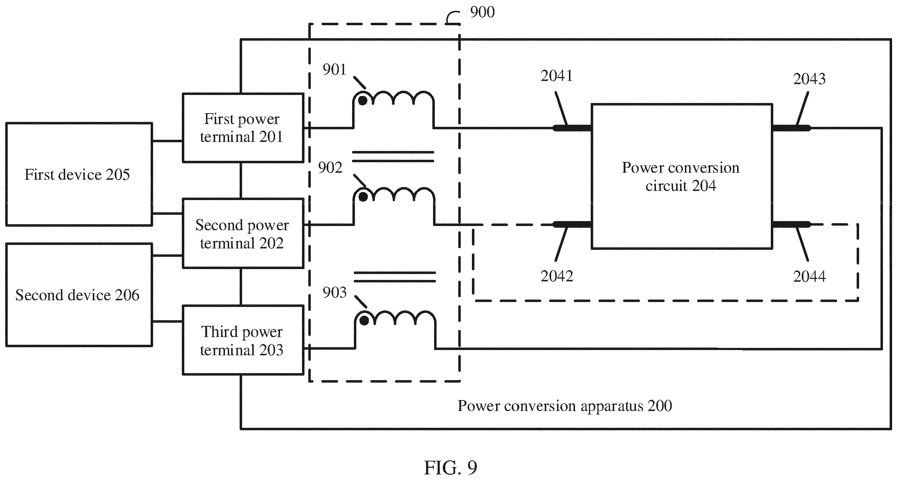

Refer to FIG. 9. To suppress common-mode noise of the power conversion circuit 204, FIG. 9 is a schematic diagram 3 of a structure of a power conversion apparatus. The power conversion apparatus 200 further includes a three-wire common-mode inductor 900. The three-wire common-mode inductor 900 includes a first winding 901, a second winding 902, and a third winding 903, a dotted terminal of the first winding 901 is connected to a first power terminal 201, a dotted terminal of the second winding 902 is connected to a second power terminal 202, and a dotted terminal of the third winding 903 is connected to a third power terminal 203. An unnamed end of the first winding 901 is connected to the first positive end 2041, the first negative end 2042 and/or the second negative end 2044 is connected to the unnamed end of the second winding 902, and an unnamed end of the third winding 903 is connected to the second positive end 2043.

The three-wire common-mode inductor 900 is configured to suppress the common-mode noise in the power conversion circuit 204. After the common-mode noise at the first negative end 2042 or the second negative end 2044 is suppressed, only a ripple current flows through the second winding 902 connected to the first negative end 2042 or the second negative end 2044, which reduces a coil loss.

In a possible implementation, the second power terminal may be a copper bar or a connector structure. The first negative output end 2052 of the first device 205 and the second negative input end 2062 of the second device 206 may be connected to the first negative end 2042 or the second negative end 2044 by using a cable copper bar or a connector structure. Alternatively, the first positive output end 2051 of the first device 205 and the second positive input end 2061 of the second device 206 may be connected to the first positive end 2041 or the second positive end 2043 by using a copper bar or a connector structure.

In a possible implementation, at least one of the following devices may be included between the first power terminal 201 and the second power terminal 202: a fuse, a switch component, or a shunt. The fuse may be blown immediately when a current in a loop increases rapidly because of a short-circuit fault of a line, so as to protect an electrical device and a line connected to the fuse, thereby avoiding an accident caused by damage. The switch component is configured to control a connection status between the first power terminal 201 and the second power terminal 202. The shunt is configured to measure a magnitude of a current between the first power terminal and the second power terminal, and is made according to a principle a voltage is generated at two ends of a resistor when the current passes through the resistor.

In this embodiment of this application, the first power terminal 201 and the third power terminal 203 may also be a copper bar or a connector structure. This is not limited herein. The terminals in the foregoing embodiments are defined based on functions. If a plurality of terminals are connected in parallel due to a reason such as the flowing current, terminals with a same function may be considered as a same terminal.

According to the power conversion apparatus provided in this application, a three-power terminal structure is used, so that power currents flowing through a bus connected to a first negative end or a second negative end may mutually cancel each other out, which reduces a loss on a PCB board caused by the flowing current. In addition, after common-mode noise is filtered by using a common-mode inductor, a current that flows through the common-mode inductor connected to the first negative end or the second negative end is mainly a ripple current, which reduces a coil loss.

Based on a same idea, this application provides an energy storage system, including a battery pack and the power conversion apparatus described in the foregoing embodiment. The battery pack includes a plurality of battery cells connected in series, and the power conversion apparatus is connected to the battery pack, configured to convert a direct current input to the battery pack, and/or convert a direct current output from the battery pack. Optionally, the battery pack includes a plurality of battery strings in parallel, and each battery string includes a plurality of battery cells connected in series.

Based on a same concept, this application further provides an optical storage system, including an inverter, the power conversion apparatus, and the battery pack described in the foregoing embodiments. The power conversion apparatus is configured to convert a current from the inverter, and input the converted current to the battery pack, and/or is configured to convert a current of the battery pack, and output the converted current to a power grid or a load. Optionally, the battery pack includes a plurality of battery strings in parallel, and each battery string includes a plurality of battery cells connected in series.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product implemented on one or more computer-usable storage media (including but not limited to a disk memory, a CD-ROM, an optical memory, or the like) that include computer-usable program code.

This application is described with reference to flowcharts and/or block diagrams of the method, a device (system), and a computer program product in this application. It should be understood that each procedure and/or block in the flowcharts and/or block diagrams, and combinations of the procedures and/or blocks in the flowcharts and/or block diagrams may be implemented by computer program instructions. These computer program instructions may be provided for a general-purpose computer, a dedicated computer, an embedded processor, or a processor of any other programmable data processing device to generate a machine, so that the instructions executed by the computer or the processor of any other programmable data processing device generate an apparatus for implementing a specific function in one or more processes in the flowcharts and/or in one or more blocks in the block diagrams.

These computer program instructions may be stored in a computer-readable memory that may instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

## Claims

1. A power conversion apparatus (200), comprising a power conversion circuit (204), a first power terminal (201), a second power terminal (202), and a third power terminal (203), wherein
the power conversion circuit comprises a first positive end (2041), a first negative end (2042), a second positive end (2043), a second negative end (2044), and at least one power device, and the first negative end and the second negative end have a same potential;
the power conversion circuit is configured to convert a first voltage input by a first device (205) into a second voltage, and output the second voltage to a second device (206); and
the first power terminal is connected to the first positive end, the first negative end or the second negative end is connected to the second power terminal, and the third power terminal is connected to the second positive end,
wherein a first positive output end (2051) of the first device is connected to the second power terminal (202), and a first negative output end (2052) of the first device is connected to the first power terminal (201); and
a second positive input end (2061) of the second device is connected to the second power terminal (202), and a second negative input end (2062) of the second device is connected to the third power terminal (203),
wherein the power conversion circuit comprises a first capacitor, a first switch component, a second switch component, a first inductor, and a second capacitor, wherein a first end of the first capacitor is connected to a first end of the first switch component, a second end of the first switch component is separately connected to a first end of the first inductor and a first end of the second switch component, a third end of the first switch component is configured to input a signal for controlling a status of the first switch component, a second end of the second switch component is separately connected to a second end of the first capacitor and a first end of the second capacitor, a third end of the second switch component is configured to input a signal for controlling a status of the second switch component, and a second end of the first inductor is connected to a second end of the second capacitor; and
the first positive end (2401) is connected to the first end of the first capacitor, the first negative end (2042) is connected to the second end of the first capacitor, the second positive end (2043) is connected to the first end of the second capacitor, and the second negative end (2044) is connected to the second end of the second capacitor; or the first positive end is connected to the first end of the second capacitor, the first negative end is connected to the second end of the second capacitor, the second positive end is connected to the first end of the first capacitor, and the second negative end is connected to the second end of the first capacitor.

2. A power conversion apparatus (200), comprising a power conversion circuit (204), a first power terminal (201), a second power terminal (202), and a third power terminal (203), wherein
the power conversion circuit comprises a first positive end (2041), a first negative end (2042), a second positive end (2043), a second negative end (2044), and at least one power device, and the first negative end and the second negative end have a same potential;
the power conversion circuit is configured to convert a first voltage input by a first device (205) into a second voltage, and output the second voltage to a second device (206); and
the first power terminal is connected to the first positive end, the first negative end or the second negative end is connected to the second power terminal, and the third power terminal is connected to the second positive end,
wherein a first positive output end of the first device is connected to the second power terminal (202), and a first negative output end of the first device is connected to the first power terminal (201); and
a second positive input end of the second device is connected to the second power terminal (202), and a second negative input end of the second device is connected to the third power terminal (203),
wherein the power conversion circuit comprises a third capacitor, a second inductor, a third switch component, a fourth switch component, and a fourth capacitor, wherein a first end of the third capacitor is connected to a first end of the second inductor, a second end of the second inductor is separately connected to a first end of the third switch component and a first end of the fourth switch component, a second end of the third capacitor is separately connected to a second end of the third switch component and a second end of the fourth capacitor, a second end of the fourth switch component is connected to a first end of the fourth capacitor, a third end of the third switch component is configured to input a signal for controlling a status of the third switch component, and a third end of the fourth switch component is configured to input a signal for controlling a status of the fourth switch component; and
the first positive end is connected to the first end of the third capacitor, the first negative end is connected to the second end of the third capacitor, the second positive end is connected to the first end of the fourth capacitor, and the second negative end is connected to the second end of the fourth capacitor; or the first positive end is connected to the first end of the fourth capacitor, the first negative end is connected to the second end of the fourth capacitor, the second positive end is connected to the first end of the third capacitor, and the second negative end is connected to the second end of the third capacitor.

3. A power conversion apparatus (200), comprising a power conversion circuit (204), a first power terminal (201), a second power terminal (202), and a third power terminal (203), wherein
the power conversion circuit comprises a first positive end (2041), a first negative end (2042), a second positive end (2043), a second negative end (2044), and at least one power device, and the first negative end and the second negative end have a same potential;
the power conversion circuit is configured to convert a first voltage input by a first device (205) into a second voltage, and output the second voltage to a second device (206); and
the first power terminal is connected to the first positive end, the first negative end or the second negative end is connected to the second power terminal, and the third power terminal is connected to the second positive end,
wherein a first positive output end of the first device is connected to the second power terminal (202), and a first negative output end of the first device is connected to the first power terminal (201); and
a second positive input end of the second device is connected to the second power terminal (202), and a second negative input end of the second device is connected to the third power terminal (203), wherein the power conversion circuit comprises:
a fifth capacitor, a third inductor, a fifth switch component, a sixth switch component, a seventh switch component, an eighth switch component, and a sixth capacitor, wherein a first end of the fifth capacitor is connected to a first end of the fifth switch component, a second end of the fifth switch component is connected to the first end of the third inductor, the second end of the fifth switch component is connected to a first end of the sixth switch component, a second end of the sixth switch component is connected to a second end of the fifth capacitor, a first end of the seventh switch component is connected to a first end of the sixth capacitor, a second end of the seventh switch component is connected to a first end of the eighth switch component, a second end of the eighth switch component is connected to the second end of the sixth switch component, the second end of the eighth switch component is further connected to a second end of the sixth capacitor, a second end of the third inductor is connected to the first end of the seventh switch component, a third end of the fifth switch component is configured to input a signal for controlling a status of the fifth switch component, a third end of the sixth switch component is configured to input a signal for controlling a status of the sixth switch component, a third end of the seventh switch component is configured to input a signal for controlling a status of the seventh switch component, and a third end of the eighth switch component is configured to input a signal for controlling a status of the eighth switch component; and
the first positive end is connected to the first end of the fifth capacitor, the first negative end is connected to the second end of the fifth capacitor, the second positive end is connected to the first end of the sixth capacitor, and the second negative end is connected to the second end of the sixth capacitor; or the first positive end is connected to the first end of the sixth capacitor, the first negative end is connected to the second end of the sixth capacitor, the second positive end is connected to the first end of the fifth capacitor, and the second negative end is connected to the second end of the fifth capacitor.

4. The power conversion apparatus according to any one of claims 1 to 3, wherein the second power terminal comprises a first sub-terminal (2021) and a second sub-terminal (2022); and
the first sub-terminal is connected to a first negative output end of the first device, and the second sub-terminal is connected to a second negative input end of the second device.

5. The power conversion apparatus according to any one of claims 1 to 4, wherein the power conversion apparatus further comprises a three-wire common-mode inductor (900), the three-wire common-mode inductor comprises a first winding (901), a second winding (902), and a third winding (903), a dotted terminal of the first winding is connected to the first power terminal, a dotted terminal of the second winding is connected to the second power terminal, and a dotted terminal of the third winding is connected to the third power terminal; and
an undotted terminal of the first winding is connected to the first positive end, the first negative end or the second negative end is connected to an undotted terminal of the second winding, and an undotted terminal of the third winding is connected to the second positive end.

6. The power conversion apparatus according to any one of claims 1 to 5, wherein the power conversion apparatus further comprises a controller, configured to control turn-on and turn-off of the power device in the power conversion circuit, to adjust an output voltage of the power conversion circuit.

7. An energy storage system, comprising: a battery pack and the power conversion apparatus according to any one of claims 1 to 6, wherein the battery pack comprises a plurality of battery cells connected in series, and the power conversion apparatus is connected to the battery pack, configured to convert a direct current input to the battery pack, or configured to convert a direct current output from the battery pack.

8. A photovoltaic storage system, comprising an inverter, the power conversion apparatus according to any one of claims 1 to 6, and a battery pack, wherein the power conversion apparatus is configured to convert a current from the inverter, and input the converted current to the battery pack, or is configured to convert a current of the battery pack, and output the converted current to a power grid or a load.

## Patentansprüche

1. Leistungsumwandlungsvorrichtung (200), umfassend einen Leistungsumwandlungsschaltkreis (204), ein erstes Leistungsendgerät (201), ein zweites Leistungsendgerät (202) und ein drittes Leistungsendgerät (203), wobei
der Leistungsumwandlungsschaltkreis ein erstes positives Ende (2041), ein erstes negatives Ende (2042), ein zweites positives Ende (2043), ein zweites negatives Ende (2044) und mindestens eine Leistungseinrichtung umfasst und das erste negative Ende und das zweite negative Ende ein gleiches Potenzial aufweisen;
der Leistungsumwandlungsschaltkreis dazu konfiguriert ist, eine erste Spannung, die durch eine erste Einrichtung (205) eingegeben wird, in eine zweite Spannung umzuwandeln und die zweite Spannung an eine zweite Einrichtung (206) auszugeben; und das erste Leistungsendgerät mit dem ersten positiven Ende verbunden ist, das erste negative Ende oder das zweite negative Ende mit dem zweiten Leistungsendgerät verbunden ist und das dritte Leistungsendgerät mit dem zweiten positiven Ende verbunden ist,
wobei ein erstes positives Ausgabeende (2051) der ersten Einrichtung mit dem zweiten Leistungsendgerät (202) verbunden ist und ein erstes negatives Ausgabeende (2052) der ersten Einrichtung mit dem ersten Leistungsendgerät (201) verbunden ist; und
ein zweites positives Eingabeende (2061) der zweiten Einrichtung mit dem zweiten Leistungsendgerät (202) verbunden ist und ein zweites negatives Eingabeende (2062) der zweiten Einrichtung mit dem dritten Leistungsendgerät (203) verbunden ist,
wobei der Leistungsumwandlungsschaltkreis einen ersten Kondensator, eine erste Schalterkomponente, eine zweite Schalterkomponente, einen ersten Induktor und einen zweiten Kondensator umfasst, wobei ein erstes Ende des ersten Kondensators mit einem ersten Ende der ersten Schalterkomponente verbunden ist, ein zweites Ende der ersten Schalterkomponente separat mit einem ersten Ende des ersten Induktors und einem ersten Ende der zweiten Schalterkomponente verbunden ist, ein drittes Ende der ersten Schalterkomponente dazu konfiguriert ist, ein Signal zum Steuern eines Status der ersten Schalterkomponente einzugeben, ein zweites Ende der zweiten Schalterkomponente separat mit einem zweiten Ende des ersten Kondensators und einem ersten Ende des zweiten Kondensators verbunden ist, ein drittes Ende der zweiten Schalterkomponente dazu konfiguriert ist, ein Signal zum Steuern eines Status der zweiten Schalterkomponente einzugeben, und ein zweites Ende des ersten Induktors mit einem zweiten Ende des zweiten Kondensators verbunden ist; und
das erste positive Ende (2401) mit dem ersten Ende des ersten Kondensators verbunden ist, das erste negative Ende (2042) mit dem zweiten Ende des ersten Kondensators verbunden ist, das zweite positive Ende (2043) mit dem ersten Ende des zweiten Kondensators verbunden ist und das zweite negative Ende (2044) mit dem zweiten Ende des zweiten Kondensators verbunden ist; oder das erste positive Ende mit dem ersten Ende des zweiten Kondensators verbunden ist, das erste negative Ende mit dem zweiten Ende des zweiten Kondensators verbunden ist, das zweite positive Ende mit dem ersten Ende des ersten Kondensators verbunden ist und das zweite negative Ende mit dem zweiten Ende des ersten Kondensators verbunden ist.

2. Leistungsumwandlungsvorrichtung (200), umfassend einen Leistungsumwandlungsschaltkreis (204), ein erstes Leistungsendgerät (201), ein zweites Leistungsendgerät (202) und ein drittes Leistungsendgerät (203), wobei
der Leistungsumwandlungsschaltkreis ein erstes positives Ende (2041), ein erstes negatives Ende (2042), ein zweites positives Ende (2043), ein zweites negatives Ende (2044) und mindestens eine Leistungseinrichtung umfasst und das erste negative Ende und das zweite negative Ende ein gleiches Potenzial aufweisen; der Leistungsumwandlungsschaltkreis dazu konfiguriert ist, eine erste Spannung, die durch eine erste Einrichtung (205) eingegeben wird, in eine zweite Spannung umzuwandeln und die zweite Spannung an eine zweite Einrichtung (206) auszugeben; und das erste Leistungsendgerät mit dem ersten positiven Ende verbunden ist, das erste negative Ende oder das zweite negative Ende mit dem zweiten Leistungsendgerät verbunden ist und das dritte Leistungsendgerät mit dem zweiten positiven Ende verbunden ist,
wobei ein erstes positives Ausgabeende der ersten Einrichtung mit dem zweiten Leistungsendgerät (202) verbunden ist und ein erstes negatives Ausgabeende der ersten Einrichtung mit dem ersten Leistungsendgerät (201) verbunden ist; und
ein zweites positives Eingabeende der zweiten Einrichtung mit dem zweiten Leistungsendgerät (202) verbunden ist und ein zweites negatives Eingabeende der zweiten Einrichtung mit dem dritten Leistungsendgerät (203) verbunden ist,
wobei der Leistungsumwandlungsschaltkreis einen dritten Kondensator, einen zweiten Induktor, eine dritte Schalterkomponente, eine vierte Schalterkomponente und einen vierten Kondensator umfasst, wobei ein erstes Ende des dritten Kondensators mit einem ersten Ende des zweiten Induktors verbunden ist, ein zweites Ende des zweiten Induktors separat mit einem ersten Ende der dritten Schalterkomponente und einem ersten Ende der vierten Schalterkomponente verbunden ist, ein zweites Ende des dritten Kondensators separat mit einem zweiten Ende der dritten Schalterkomponente und einem zweiten Ende des vierten Kondensators verbunden ist, ein zweites Ende der vierten Schalterkomponente mit einem ersten Ende des vierten Kondensators verbunden ist, ein drittes Ende der dritten Schalterkomponente dazu konfiguriert ist, ein Signal zum Steuern eines Status der dritten Schalterkomponente einzugeben, und ein drittes Ende der vierten Schalterkomponente dazu konfiguriert ist, ein Signal zum Steuern eines Status der vierten Schalterkomponente einzugeben; und
das erste positive Ende mit dem ersten Ende des dritten Kondensators verbunden ist, das erste negative Ende mit dem zweiten Ende des dritten Kondensators verbunden ist, das zweite positive Ende mit dem ersten Ende des vierten Kondensators verbunden ist und das zweite negative Ende mit dem zweiten Ende des vierten Kondensators verbunden ist; oder das erste positive Ende mit dem ersten Ende des vierten Kondensators verbunden ist, das erste negative Ende mit dem zweiten Ende des vierten Kondensators verbunden ist, das zweite positive Ende mit dem ersten Ende des dritten Kondensators verbunden ist und das zweite negative Ende mit dem zweiten Ende des dritten Kondensators verbunden ist.

3. Leistungsumwandlungsvorrichtung (200), umfassend einen Leistungsumwandlungsschaltkreis (204), ein erstes Leistungsendgerät (201), ein zweites Leistungsendgerät (202) und ein drittes Leistungsendgerät (203), wobei
der Leistungsumwandlungsschaltkreis ein erstes positives Ende (2041), ein erstes negatives Ende (2042), ein zweites positives Ende (2043), ein zweites negatives Ende (2044) und mindestens eine Leistungseinrichtung umfasst und das erste negative Ende und das zweite negative Ende ein gleiches Potenzial aufweisen;
der Leistungsumwandlungsschaltkreis dazu konfiguriert ist, eine erste Spannung, die durch eine erste Einrichtung (205) eingegeben wird, in eine zweite Spannung umzuwandeln und die zweite Spannung an eine zweite Einrichtung (206) auszugeben; und das erste Leistungsendgerät mit dem ersten positiven Ende verbunden ist, das erste negative Ende oder das zweite negative Ende mit dem zweiten Leistungsendgerät verbunden ist und das dritte Leistungsendgerät mit dem zweiten positiven Ende verbunden ist,
wobei ein erstes positives Ausgabeende der ersten Einrichtung mit dem zweiten Leistungsendgerät (202) verbunden ist und ein erstes negatives Ausgabeende der ersten Einrichtung mit dem ersten Leistungsendgerät (201) verbunden ist; und
ein zweites positives Eingabeende der zweiten Einrichtung mit dem zweiten Leistungsendgerät (202) verbunden ist und ein zweites negatives Eingabeende der zweiten Einrichtung mit dem dritten Leistungsendgerät (203) verbunden ist, wobei der Leistungsumwandlungsschaltkreis Folgendes umfasst:
einen fünften Kondensator, einen dritte Induktor, eine fünfte Schalterkomponente, eine sechste Schalterkomponente, eine siebte Schalterkomponente, eine achte Schalterkomponente und einen sechsten Kondensator, wobei ein erstes Ende des fünften Kondensators mit einem ersten Ende der fünften Schalterkomponente verbunden ist, ein zweites Ende der fünften Schalterkomponente mit dem ersten Ende des dritten Induktors verbunden ist, das zweite Ende der fünften Schalterkomponente mit einem ersten Ende der sechsten Schalterkomponente verbunden ist, ein zweites Ende der sechsten Schalterkomponente mit einem zweiten Ende des fünften Kondensators verbunden ist, ein erstes Ende der siebten Schalterkomponente mit einem ersten Ende des sechsten Kondensators verbunden ist, ein zweites Ende der siebten Schalterkomponente mit einem ersten Ende der achten Schalterkomponente verbunden ist, ein zweites Ende der achten Schalterkomponente mit dem zweiten Ende der sechsten Schalterkomponente verbunden ist, das zweite Ende der achten Schalterkomponente ferner mit einem zweiten Ende des sechsten Kondensators verbunden ist, ein zweites Ende des dritten Induktors mit dem ersten Ende der siebten Schalterkomponente verbunden ist, ein drittes Ende der fünften Schalterkomponente dazu konfiguriert ist, ein Signal zum Steuern eines Status der fünften Schalterkomponente einzugeben, ein drittes Ende der sechsten Schalterkomponente dazu konfiguriert ist, ein Signal zum Steuern eines Status der sechsten Schalterkomponente einzugeben, ein drittes Ende der siebten Schalterkomponente dazu konfiguriert ist, ein Signal zum Steuern eines Status der siebten Schalterkomponente einzugeben, und ein drittes Ende der achten Schalterkomponente dazu konfiguriert, ein Signal zum Steuern eines Status der achten Schalterkomponente einzugeben; und
das erste positive Ende mit dem ersten Ende des fünften Kondensators verbunden ist, das erste negative Ende mit dem zweiten Ende des fünften Kondensators verbunden ist, das zweite positive Ende mit dem ersten Ende des sechsten Kondensators verbunden ist und das zweite negative Ende mit dem zweiten Ende des sechsten Kondensators verbunden ist; oder das erste positive Ende mit dem ersten Ende des sechsten Kondensators verbunden ist, das erste negative Ende mit dem zweiten Ende des sechsten Kondensators verbunden ist, das zweite positive Ende mit dem ersten Ende des fünften Kondensators verbunden ist und das zweite negative Ende mit dem zweiten Ende des fünften Kondensators verbunden ist.

4. Leistungsumwandlungsvorrichtung nach einem der Ansprüche 1 bis 3, wobei das zweite Leistungsendgerät ein erstes Teilendgerät (2021) und ein zweites Teilendgerät (2022) umfasst; und
das erste Teilendgerät mit einem ersten negativen Ausgabeende der ersten Einrichtung verbunden ist und das zweite Teilendgerät mit einem zweiten negativen Eingabeende der zweiten Einrichtung verbunden ist.

5. Leistungsumwandlungsvorrichtung nach einem der Ansprüche 1 bis 4, wobei die Leistungsumwandlungsvorrichtung ferner einen Dreileiter-Gleichtaktinduktor (900) umfasst, wobei der Dreileiter-Gleichtaktinduktor eine erste Wicklung (901), eine zweite Wicklung (902) und eine dritte Wicklung (903) umfasst, ein gepunktetes Endgerät der ersten Wicklung mit dem ersten Leistungsendgerät verbunden ist, ein gepunktetes Endgerät der zweiten Wicklung mit dem zweiten Leistungsendgerät verbunden ist und ein gepunktetes Endgerät der dritten Wicklung mit dem dritten Leistungsendgerät verbunden ist; und
ein nicht gepunktetes Endgerät der ersten Wicklung mit dem ersten positiven Ende verbunden ist, das erste negative Ende oder das zweite negative Ende mit einem nicht gepunkteten Endgerät der zweiten Wicklung verbunden ist und ein nicht gepunktetes Endgerät der dritten Wicklung mit dem zweiten positiven Ende verbunden ist.

6. Leistungsumwandlungsvorrichtung nach einem der Ansprüche 1 bis 5, wobei die Leistungsumwandlungsvorrichtung ferner eine Steuerung umfasst, die dazu konfiguriert ist, Einschalten und Ausschalten der Leistungseinrichtung in dem Leistungsumwandlungsschaltkreis zu steuern, um eine Ausgabespannung des Leistungsumwandlungsschaltkreises anzupassen.

7. Energiespeichersystem, umfassend: einen Batteriepack und die Leistungsumwandlungsvorrichtung nach einem der Ansprüche 1 bis 6, wobei der Batteriepack eine Vielzahl in Reihe geschalteter Batteriezellen umfasst und die Leistungsumwandlungsvorrichtung mit dem Batteriepack verbunden und dazu konfiguriert ist, einen Gleichstrom, der in den Batteriepack eingegeben wird, umzuwandeln, oder dazu konfiguriert ist, einen Gleichstrom, der aus dem Batteriepack ausgegeben wird, umzuwandeln.

8. Photovoltaisches Speichersystem, umfassend einen Wechselrichter, die Leistungsumwandlungsvorrichtung nach einem der Ansprüche 1 bis 6 und einen Batteriepack, wobei die Leistungsumwandlungsvorrichtung dazu konfiguriert ist, einen Strom von dem Wechselrichter umzuwandeln und den umgewandelten Strom in den Batteriepack einzugeben, oder dazu konfiguriert ist, einen Strom des Batteriepacks umzuwandeln und den umgewandelten Strom an ein Stromnetz oder einen Verbraucher auszugeben.

## Revendications

1. Appareil de conversion de puissance (200), comprenant un circuit de conversion de puissance (204), une première borne d'alimentation (201), une deuxième borne d'alimentation (202), et une troisième borne d'alimentation (203), dans lequel
le circuit de conversion de puissance comprend une première extrémité positive (2041), une première extrémité négative (2042), une seconde extrémité positive (2043), une seconde extrémité négative (2044), et au moins un dispositif d'alimentation, et la première extrémité négative et la seconde extrémité négative ont un même potentiel ;
le circuit de conversion de puissance est configuré pour convertir une première tension entrée par un premier dispositif (205) en une seconde tension, et délivrer la seconde tension à un second dispositif (206) ; et
la première borne d'alimentation est connectée à la première extrémité positive, la première extrémité négative ou la seconde extrémité négative est connectée à la deuxième borne d'alimentation, et la troisième borne d'alimentation est connectée à la seconde extrémité positive,
dans lequel une première extrémité de sortie positive (2051) du premier dispositif est connectée à la deuxième borne d'alimentation (202), et une première extrémité de sortie négative (2052) du premier dispositif est connectée à la première borne d'alimentation (201) ; et
une seconde extrémité d'entrée positive (2061) du second dispositif est connectée à la deuxième borne d'alimentation (202), et une seconde extrémité d'entrée négative (2062) du second dispositif est connectée à la troisième borne d'alimentation (203),
dans lequel le circuit de conversion de puissance comprend un premier condensateur, un premier composant de commutation, un deuxième composant de commutation, une première bobine d'inductance, et un deuxième condensateur, dans lequel une première extrémité du premier condensateur est connectée à une première extrémité du premier composant de commutation, une deuxième extrémité du premier composant de commutation est connectée séparément à une première extrémité de la première bobine d'inductance et à une première extrémité du deuxième composant de commutation, une troisième extrémité du premier composant de commutation est configurée pour entrer un signal permettant de commander un état du premier composant de commutation, une deuxième extrémité du deuxième composant de commutation est connectée séparément à une deuxième extrémité du premier condensateur et à une première extrémité du deuxième condensateur, une troisième extrémité du deuxième composant de commutation est configurée pour entrer un signal permettant de commander un état du deuxième composant de commutation, et une deuxième extrémité de la première bobine d'inductance est connectée à une deuxième extrémité du deuxième condensateur ; et
la première extrémité positive (2401) est connectée à la première extrémité du premier condensateur, la première extrémité négative (2042) est connectée à la deuxième extrémité du premier condensateur, la seconde extrémité positive (2043) est connectée à la première extrémité du deuxième condensateur, et la seconde extrémité négative (2044) est connectée à la deuxième extrémité du deuxième condensateur ; ou la première extrémité positive est connectée à la première extrémité du deuxième condensateur, la première extrémité négative est connectée à la deuxième extrémité du deuxième condensateur, la seconde extrémité positive est connectée à la première extrémité du premier condensateur, et la seconde extrémité négative est connectée à la deuxième extrémité du premier condensateur.

2. Appareil de conversion de puissance (200), comprenant un circuit de conversion de puissance (204), une première borne d'alimentation (201), une deuxième borne d'alimentation (202), et une troisième borne d'alimentation (203), dans lequel
le circuit de conversion de puissance comprend une première extrémité positive (2041), une première extrémité négative (2042), une seconde extrémité positive (2043), une seconde extrémité négative (2044), et au moins un dispositif d'alimentation, et la première extrémité négative et la seconde extrémité négative ont un même potentiel ;
le circuit de conversion de puissance est configuré pour convertir une première tension entrée par un premier dispositif (205) en une seconde tension, et délivrer la seconde tension à un second dispositif (206) ; et
la première borne d'alimentation est connectée à la première extrémité positive, la première extrémité négative ou la seconde extrémité négative est connectée à la deuxième borne d'alimentation, et la troisième borne d'alimentation est connectée à la seconde extrémité positive,
dans lequel une première extrémité de sortie positive du premier dispositif est connectée à la deuxième borne d'alimentation (202), et une première extrémité de sortie négative du premier dispositif est connectée à la première borne d'alimentation (201) ; et
une seconde extrémité d'entrée positive du second dispositif est connectée à la deuxième borne d'alimentation (202), et une seconde extrémité d'entrée négative du second dispositif est connectée à la troisième borne d'alimentation (203),
dans lequel le circuit de conversion de puissance comprend un troisième condensateur, une deuxième bobine d'inductance, un troisième composant de commutation, un quatrième composant de commutation, et un quatrième condensateur, dans lequel une première extrémité du troisième condensateur est connectée à une première extrémité de la deuxième bobine d'inductance, une deuxième extrémité de la deuxième bobine d'inductance est connectée séparément à une première extrémité du troisième composant de commutation et à une première extrémité du quatrième composant de commutation, une deuxième extrémité du troisième condensateur est connectée séparément à une deuxième extrémité du troisième composant de commutation et à une deuxième extrémité du quatrième condensateur, une deuxième extrémité du quatrième composant de commutation est connectée à une première extrémité du quatrième condensateur, une troisième extrémité du troisième composant de commutation est configurée pour entrer un signal permettant de commander un état du troisième composant de commutation, et une troisième extrémité du quatrième composant de commutation est configurée pour entrer un signal permettant de commander un état du quatrième composant de commutation ; et
la première extrémité positive est connectée à la première extrémité du troisième condensateur, la première extrémité négative est connectée à la deuxième extrémité du troisième condensateur, la seconde extrémité positive est connectée à la première extrémité du quatrième condensateur, et la seconde extrémité négative est connectée à la deuxième extrémité du quatrième condensateur ; ou la première extrémité positive est connectée à la première extrémité du quatrième condensateur, la première extrémité négative est connectée à la deuxième extrémité du quatrième condensateur, la seconde extrémité positive est connectée à la première extrémité du troisième condensateur, et la seconde extrémité négative est connectée à la deuxième extrémité du troisième condensateur.

3. Appareil de conversion de puissance (200), comprenant un circuit de conversion de puissance (204), une première borne d'alimentation (201), une deuxième borne d'alimentation (202), et une troisième borne d'alimentation (203), dans lequel
le circuit de conversion de puissance comprend une première extrémité positive (2041), une première extrémité négative (2042), une seconde extrémité positive (2043), une seconde extrémité négative (2044), et au moins un dispositif d'alimentation, et la première extrémité négative et la seconde extrémité négative ont un même potentiel ;
le circuit de conversion de puissance est configuré pour convertir une première tension entrée par un premier dispositif (205) en une seconde tension, et délivrer la seconde tension à un second dispositif (206) ; et
la première borne d'alimentation est connectée à la première extrémité positive, la première extrémité négative ou la seconde extrémité négative est connectée à la deuxième borne d'alimentation, et la troisième borne d'alimentation est connectée à la seconde extrémité positive,
dans lequel une première extrémité de sortie positive du premier dispositif est connectée à la deuxième borne d'alimentation (202), et une première extrémité de sortie négative du premier dispositif est connectée à la première borne d'alimentation (201) ; et
une seconde extrémité d'entrée positive du second dispositif est connectée à la deuxième borne d'alimentation (202), et une seconde extrémité d'entrée négative du second dispositif est connectée à la troisième borne d'alimentation (203), dans lequel le circuit de conversion de puissance comprend :
un cinquième condensateur, une troisième bobine d'inductance, un cinquième composant de commutation, un sixième composant de commutation, un septième composant de commutation, un huitième composant de commutation, et un sixième condensateur, dans lequel une première extrémité du cinquième condensateur est connectée à une première extrémité du cinquième composant de commutation, une deuxième extrémité du cinquième composant de commutation est connectée à la première extrémité de la troisième bobine d'inductance, la deuxième extrémité du cinquième composant de commutation est connectée à une première extrémité du sixième composant de commutation, une deuxième extrémité du sixième composant de commutation est connectée à une deuxième extrémité du cinquième condensateur, une première extrémité du septième composant de commutation est connectée à une première extrémité du sixième condensateur, une deuxième extrémité du septième composant de commutation est connectée à une première extrémité du huitième composant de commutation, une deuxième extrémité du huitième composant de commutation est connectée à la deuxième extrémité du sixième composant de commutation, la deuxième extrémité du huitième composant de commutation est également connectée à une deuxième extrémité du sixième condensateur, une deuxième extrémité de la troisième bobine d'inductance est connectée à la première extrémité du septième composant de commutation, une troisième extrémité du cinquième composant de commutation est configurée pour entrer un signal permettant de commander un état du cinquième composant de commutation, une troisième extrémité du sixième composant de commutation est configurée pour entrer un signal permettant de commander un état du sixième composant de commutation, une troisième extrémité du septième composant de commutation est configurée pour entrer un signal permettant de commander un état du septième composant de commutation, et une troisième extrémité du huitième composant de commutation est configurée pour entrer un signal permettant de commander un état du huitième composant de commutation ; et
la première extrémité positive est connectée à la première extrémité du cinquième condensateur, la première extrémité négative est connectée à la deuxième extrémité du cinquième condensateur, la seconde extrémité positive est connectée à la première extrémité du sixième condensateur, et la seconde extrémité négative est connectée à la deuxième extrémité du sixième condensateur ; ou la première extrémité positive est connectée à la première extrémité du sixième condensateur, la première extrémité négative est connectée à la deuxième extrémité du sixième condensateur, la seconde extrémité positive est connectée à la première extrémité du cinquième condensateur, et la seconde extrémité négative est connectée à la deuxième extrémité du cinquième condensateur.

4. Appareil de conversion de puissance selon l'une quelconque des revendications 1 à 3, dans lequel la deuxième borne d'alimentation comprend une première sous-borne (2021) et une seconde sous-borne (2022) ; et
la première sous-borne est connectée à une première extrémité de sortie négative du premier dispositif, et la seconde sous-borne est connectée à une seconde extrémité d'entrée négative du second dispositif.

5. Appareil de conversion de puissance selon l'une quelconque des revendications 1 à 4, dans lequel l'appareil de conversion de puissance comprend également une bobine d'inductance de mode commun à trois fils (900), la bobine d'inductance de mode commun à trois fils comprend un premier enroulement (901), un deuxième enroulement (902) et un troisième enroulement (903), une borne en pointillé du premier enroulement est connectée à la première borne d'alimentation, une borne en pointillé du deuxième enroulement est connectée à la deuxième borne d'alimentation, et une borne en pointillé du troisième enroulement est connectée à la troisième borne d'alimentation ; et
une borne non pointillée du premier enroulement est connectée à la première extrémité positive, la première extrémité négative ou la seconde extrémité négative est connectée à une borne non pointillée du deuxième enroulement, et une borne non pointillée du troisième enroulement est connectée à la seconde extrémité positive.

6. Appareil de conversion de puissance selon l'une quelconque des revendications 1 à 5, dans lequel l'appareil de conversion de puissance comprend également un dispositif de commande, configuré pour commander la mise sous tension et hors tension du dispositif d'alimentation dans le circuit de conversion de puissance, afin d'ajuster une tension de sortie du circuit de conversion de puissance.

7. Système de stockage d'énergie, comprenant : un bloc-batterie et l'appareil de conversion de puissance selon l'une quelconque des revendications 1 à 6, dans lequel le bloc-batterie comprend une pluralité de cellules de batterie connectées en série, et l'appareil de conversion de puissance est connecté au bloc-batterie, configuré pour convertir une entrée de courant continu au bloc-batterie, ou configuré pour convertir une sortie de courant continu à partir du bloc-batterie.

8. Système de stockage photovoltaïque, comprenant un onduleur, l'appareil de conversion de puissance selon l'une quelconque des revendications 1 à 6, et un bloc-batterie, dans lequel l'appareil de conversion de puissance est configuré pour convertir un courant provenant de l'onduleur, et entrer le courant converti dans le bloc-batterie, ou est configuré pour convertir un courant du bloc-batterie, et délivrer le courant converti vers un réseau électrique ou une charge.
